# EUROPÄISCHE PATENTSCHRIFT

(11) **EP 1 699 125 B1**
(45) Veröffentlichungstag und Bekanntmachung des Hinweises auf die Patenterteilung: **23.07.2014**
(21) Anmeldenummer: 06110447.7
(22) Anmeldetag: 27.02.2006
(51) Int. Cl.: H02K 19/38, H02K 9/16

(54) **Gasgekühlter Generator**
Gas-cooled generator
Générateur refroidi par gaz

(30) Priorität: 04.03.2005 CH 3802005
(43) Veröffentlichungstag der Anmeldung: 06.09.2006
(73) Patentinhaber: Alstom Technology Ltd, 5400 Baden (CH)
(72) Erfinder: Bresson, Michel, 90000 Belfort (FR); Chadouteau, Dominique, 90000 Belfort (FR); Diestel-Feddersen, Lennart, 5200 Brugg (CH); Izquierdo, Alberto, 5432 Neuenhof (CH); Meylan, René, 1400 Yverdon-les-Bains (CH)

(56) Entgegenhaltungen:
- EP-A- 0 377 154
- US-A- 4 745 315
- PATENT ABSTRACTS OF JAPAN Bd. 017, Nr. 440 (E-1414), 13. August 1993 (1993-08-13) -& JP 05 091695 A (TOSHIBA CORP), 9. April 1993 (1993-04-09)
- PATENT ABSTRACTS OF JAPAN Bd. 1997, Nr. 01, 31. Januar 1997 (1997-01-31) -& JP 08 251871 A (FUJI ELECTRIC CO LTD), 27. September 1996 (1996-09-27)

## Beschreibung

### TECHNISCHES GEBIET

Die vorliegende Erfindung bezieht sich auf das Gebiet der rotierenden Maschinen. Sie betrifft einen gasgekühlten Generator gemäss dem Oberbegriff des Anspruchs 1.

### STAND DER TECHNIK

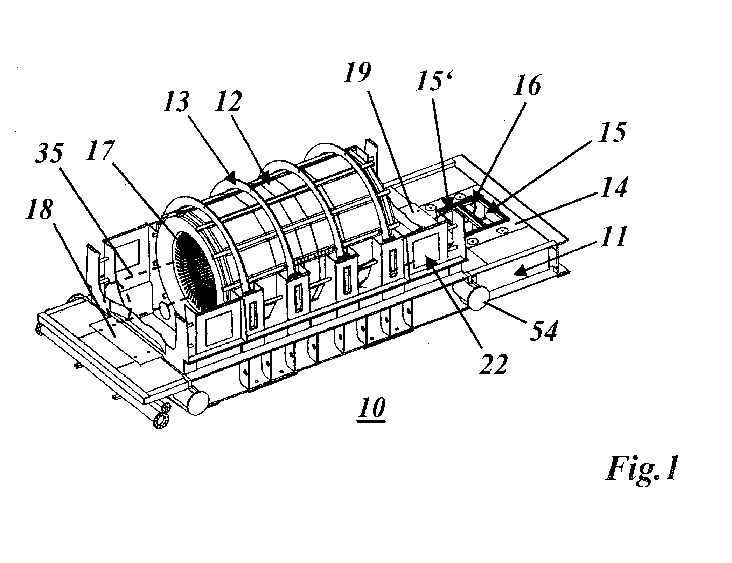

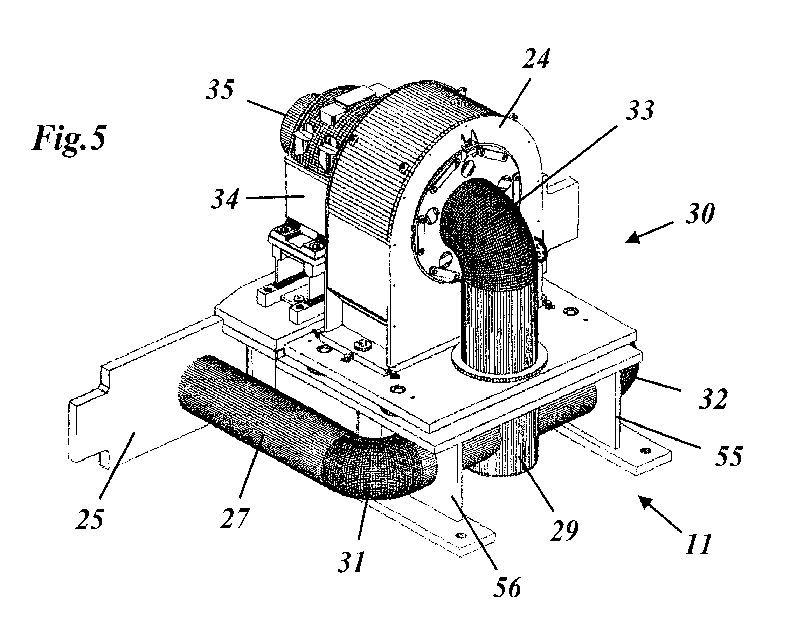

Gasgekühlte, insbesondere luftgekühlte Generatoren der Leistungsklasse von einigen 100 MVA mit rotierendem Erreger werden von der Anmelderin seit längerer Zeit angeboten. Die für die Kühlung massgebenden Einzelheiten dieser bekannten Generatoren sind in den Fig. 1 bis 3 wiedergegeben. Der Generator 10 der Fig. 1 ist auf einem stabilen, kastenförmigen Grundrahmen 11 aufgebaut, der seitlich durch umlaufende U-Profile begrenzt ist und an den Längsseiten seitlich herausstehende Poller 54 aufweist, an denen der Generator 10 mit einem Kran oder dgl. angehoben werden kann. Auf dem Grundrahmen 11 ist mittels einer Mehrzahl von Tragringen 13 ein hohlzylindrischer Stator 12 befestigt, dessen zylindrischer Innenraum 17 einen nicht dargestellten Rotor aufnimmt, der in Fig. 1 durch eine den Rotor tragende Generatorwelle 35 angedeutet ist. Die drehbare Lagerung des Rotors bzw. der Generatorwelle erfolgt mittels Lagerböcken (34 in Fig. 5), die auf eigens dafür vorgesehenen Tragplatten 18, 19 auf der Oberseite des Grundrahmens 11 befestigt sind. Der Stator 12 ist im zusammengebauten Zustand von Kühlluftkammern umgeben, die aus einzelnen Wandelementen 22 aufgebaut sind (Fig. 1 zeigt nur den unteren Teil der entlang einer horizontalen Trennebene teilbaren Kammern). Die Kühlluftkammern sind teilweise durch innerhalb des Grundrahmens 11 verlaufende Verbindungskanäle untereinander und teilweise mit oberhalb des Stators 12 angeordneten (in Fig. 1 nicht gezeigten) Kühlern verbunden, so dass ein Kühlkreislauf entsteht, der durch Rotor und Stator und die zugehörigen Wicklungen und Luftspalte verläuft und den Grundrahmen 11 als Teil des Kreislaufes mit einbezieht.

Gemäss Fig. 2 und 3 ist der dem Stator 12 zugeordnete Bereich des Grundrahmens 11 von dem in axialer Richtung anschliessenden, einem rotierenden Erreger 24 zugeordneten Bereich durch eine Querwand 25 getrennt, die an beiden Enden jeweils in einen Poller 54 übergeht. Im Erregerbereich des Grundrahmens 11 sind durch zwei parallele, in axialer Richtung verlaufende Zwischenwände 55 und 56 zwei seitliche Hohlräume 20 und 21 abgetrennt, zwischen denen sich ein dritter, grösserer Hohlraum befindet, der seinerseits in der Mitte durch eine quer verlaufende Zwischenwand 57 unterteilt ist (siehe auch Fig. 4, 5). Der äussere Teil des mittleren, grösseren Hohlraums ist mit den seitlichen Hohlräumen 20, 21 durch (kreisrunde) Durchbrüche 16 in den Zwischenwänden 55, 56 verbunden. Die seitlichen Hohlräume 20, 21 sind über entsprechende Durchbrüche in der Querwand 25 mit dem Statorbereich des Grundrahmens 11 verbunden. Der mittlere, grössere Hohlraum ist oben durch eine Abdeckplatte 14 abgeschlossen, die zwei nebeneinander liegende, rechteckige Öffnungen 15, 15' aufweist. Jede der beiden Öffnungen 15, 15' ermöglicht den Zugang in einen darunterliegenden Teilbereich des mittleren Hohlraums.

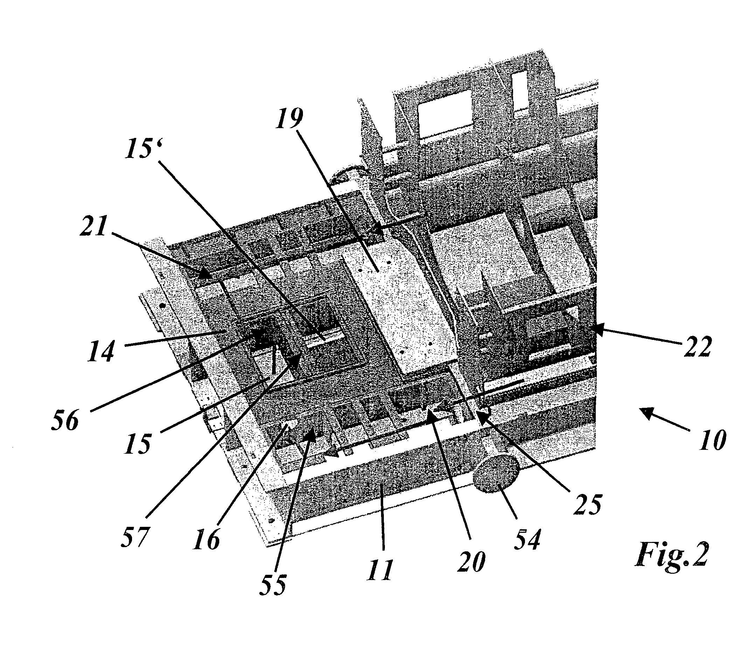

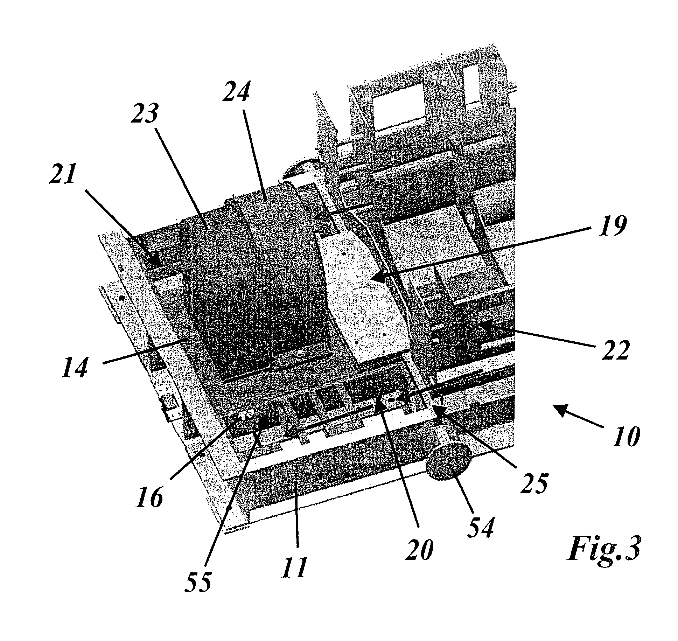

Wie aus Fig. 3 zu entnehmen ist, ist oberhalb der Öffnung 15' der rotierende Erreger 24 angeordnet, der die ihn durchströmende Kühlluft nach unten durch die Öffnung 15' in den darunterliegenden Hohlraum abgibt, von wo sie zurück zum unterhalb des Stators 12 liegenden Bereich des Grundrahmens 11 strömt. Der Erreger 24 erhält die Kühlluft über eine Luftzuführungshaube 23 (Fig. 3), die oberhalb der Öffnung 15 angeordnet ist. Gemäss den in Fig. 2 und 3 im Grundrahmen 11 eingezeichneten Strömungspfeilen tritt Kühlluft aus dem Statorbereich des Grundrahmens 11 durch die Durchbrüche in der Querwand 25 hindurch in die beiden seitlichen Hohlräume 20, 21 ein, von dort durch die Durchbrüche 16 in den Zwischenwänden 55, 56 hindurch in den äusseren Teil des mittleren Hohlraums, und von dort durch die Öffnung 15 nach oben in die Luftzuführungshaube 23. Die Luftzuführungshaube 23 sorgt dann für eine axiale Einspeisung der Kühlluft in den Erreger 24.

Nachteilig ist bei dieser Art der Kühlluftführung innerhalb des Grundrahmens 11, dass aufgrund der ständig wechselnden Durchmesser im Strömungspfad erhebliche Druckverluste auftreten, welche den Kühlluftstrom und damit die Effizienz der Kühlung beeinträchtigen.

JP 05 09 1695 offenbart eine Einrichtung gemäß dem Oberbegriff des Anspruchs 1.

### DARSTELLUNG DER ERFINDUNG

Es ist Aufgabe der Erfindung, einen Generator der eingangs genannten Art konstruktiv so zu verändern, dass der Kühlluftstrom durch den Erreger massiv gesteigert und damit die Kühlung des Erregers erheblich verbessert wird, wobei auch eine einfache Nachrüstbarkeit der Kühlung des Erregers gewährleistet sein muss.

Die Aufgabe wird durch die Gesamtheit der Merkmale des Anspruchs 1 gelöst. Durch den weitestgehenden Einsatz von Rohren für die Kühlluftführung durch den Erreger wird ein gleichbleibender Durchmesser des Strömungskanals erreicht. Damit können die Druckverluste drastisch verringert werden. Die Versorgung eines Erregers aus dem Generator-Kühlkreislauf über eigenständige Kanäle bzw. Rohre ist zwar prinzipiell aus der US-A-4,904,890 bekannt, jedoch ist hier der Erreger freitragend axial an das Generatorgehäuse angeflanscht, ohne auf einem Teil eines gemeinsamen Grundrahmens montiert zu sein.

Erfindungsgemäß ist ausserdem vorgesehen, dass das Kühlgas auf der dem Rotor abgewandten Seite in axialer Richtung dem Erreger zugeführt wird, dass das Kühlgas im Grundrahmen mittels zweier Rohre auf beiden Seiten in axialer Richtung am Erreger vorbeigeführt wird, und dass die beiden Rohre auf der dem Rotor abgewandten Seite des Erregers innerhalb des Grundrahmens in einem gemeinsamen dritten Rohr enden, welches aus dem Grundrahmen nach oben hinaus zum Erreger führt.

Diese Anordnung lässt sich bei Generatoren der bekannten Art besonders einfach nachrüsten, weil die Rohre leicht und ohne grössere Änderungen durch die bereits vorhandenen Hohlräume im Grundrahmen geführt werden können.

Für die ungestörte Kühlluftströmung ist es dabei besonders vorteilhaft, wenn der Krümmungsradius der Rohrknie bei vorgegebener Geometrie des Grundrahmens maximal ist.

Desgleichen ist es besonders günstig, wenn der hydraulische Durchmesser der Rohre bei vorgegebener Geometrie des Grundrahmens maximal ist.

Die Rohre können grundsätzlich eine beliebige Querschnittsform (rechteckig, dreieckig, rund, oval etc.) aufweisen. Besonders einfach und wirkungsvoll ist es jedoch, wenn die Rohre einen runden Querschnitt aufweisen.

Die Rohre sind aus Stabilitätsgründen vorzugsweise mit dem Grundrahmen verschraubt oder verschweisst.

### KURZE ERLÄUTERUNG DER FIGUREN

Die Erfindung soll nachfolgend anhand von Ausführungsbeispielen im Zusammenhang mit der Zeichnung näher erläutert werden. Es zeigen
- Fig. 1: in einer perspektivischen Seitenansicht den unteren Teil eines auf einem Grundrahmen aufgebauten Generators mit rotierendem Erreger nach dem Stand der Technik;
- Fig. 2: in einem vergrösserten Ausschnitt den Teil des Grundrahmens des bekannten Generators aus Fig. 1, der den Erreger trägt, mit der innerhalb des Grundrahmens in Hohlräumen geführten Kühlluftströmung;
- Fig. 3: in einer zu Fig. 2 vergleichbaren Darstellung den auf dem Grundrahmen montierten Erreger des bekannten Generators mit der dazugehörigen Luftzuführungshaube;

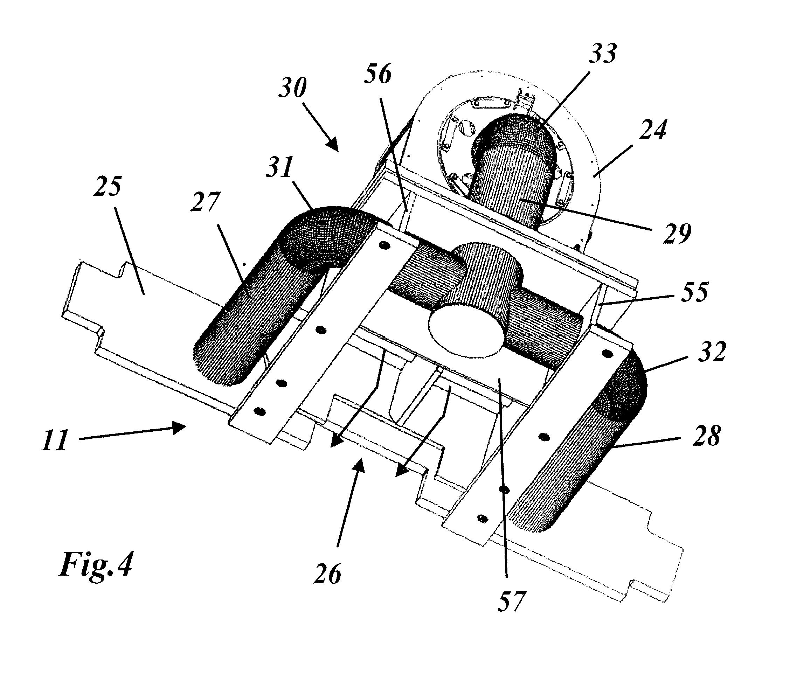

- Fig. 4: in einem Ausschnitt von unten gesehen die mit Rohren ausgeführte Kühlluftzuführung zum Erreger gemäss einem Ausführungsbeispiel der Erfindung; und
- Fig. 5: das Ausführungsbeispiel der Fig. 4 schräg von oben gesehen.

### WEGE ZUR AUSFÜHRUNG DER ERFINDUNG

In den Fig. 4 und 5 ist aus verschiedenen Blickrichtungen gesehen ein Ausführungsbeispiel der Erfindung wiedergegeben. Vom Generator 30 ist nur ein Teil des Grundrahmens 11 gezeigt, der den Erreger 24 und den benachbarten Lagerbock 34 für die Generatorwelle 35 trägt, die den Rotor des Generators andeutet. Zu diesem Teil des Grundrahmens 11 gehören die Querwand 25, sowie die beiden sich in Längsrichtung erstreckenden Zwischenwände 55 und 56, und die Zwischenwand 57, welche den mittleren Hohlraum unterhalb des Erregers 24 unterteilt. Für die Zuführung der Kühlluft zum Erreger 24 sind nun spezielle Rohre 27, 28 und 29 sowie Rohrknie 31, 32, 33 vorgesehen, welche die Kühlluft innerhalb des Grundrahmens 11 seitlich am Erreger 24 vorbeiführen (Rohre 27, 28), in einem senkrechten Rohr 29 vereinigen und aus dem Grundrahmen 11 heraus nach oben führen und mittels des Rohrknies 33 axial in den Erreger 24 einspeisen. Nach dem Kühlen tritt die Kühlluft aus dem Erreger 24 nach unten in den nach aussen durch die Zwischenwand 57 begrenzten mittleren Teilhohlraum aus und strömt durch den Ausschnitt 26 in der Querwand 25 zurück in den Statorbereich des Grundrahmens 11 (siehe Strömungspfeile in Fig. 4).

Bei der in Fig. 4 und 5 vorgeschlagenen, rohrgeführten Kühlung des Erregers 24 tritt die Kühlluft nach dem Kühlen der Wickelköpfe des Generators über die Rohre 27, 28, 29 in den Erreger ein und wird nach dem Durchströmen des Erregers zu den Kühlern des Generators zurückgeführt. Durch den Einsatz möglichst vieler Rohre für die Kühlluftführung von und zu dem Erreger 24 kann der Druckverlust der Kühlluft erheblich reduziert und damit die Kühlung verbessert werden. Vergleichende Rechnungen haben ergeben, dass bei einer rohrgeführten Kühlluftströmung auf nur einer Seite des Erregers 24 (z.B. mit dem Rohr 27) mit einem Rohrdurchmesser von 380 mm, einem Eingangsdruck am Rohr 27 von 2873 Pa und einem Ausgangsdruck am Eingang des Erregers 24 von 1667 Pa der Luftstrom durch die Rohre von 1,87 m³/s um ca. 53 % auf 2,9 m³/s erhöht werden kann. Dabei sind folgende Punkte zu beachten:
- Die Rohre können neben der in Fig. 4 und 5 gezeigten kreisrunden Querschnittsform auch andere Formen aufweisen (z.B. rechteckig oder dreieckig etc.)
- Der hydraulische Durchmesser der Rohre sollte so gross wie möglich sein (bei vorgegebener Geometrie des Grundrahmens 11)
- Der Krümmungsradius der Rohrknie, der vom verfügbaren Raum abhängt, sollte so gross wie möglich sein
- Die Rohre können im Grundrahmen 11 angeschraubt oder angeschweisst sein
- Bei kleineren Erregern kann es ausreichen, die Kühlluft nur an einer Seite (Rohr 27 oder 28) des Erregers vorbeizuführen.

### BEZUGSZEICHENLISTE

- 10, 30: Generator
- 11: Grundrahmen
- 12: Stator
- 13: Tragring
- 14: Abdeckplatte
- 15, 15': Öffnung
- 16: Durchbruch
- 17: Innenraum (Stator)
- 18, 19: Tragplatte (Lager)
- 20, 21: Hohlraum
- 22: Wandelement
- 23: Luftzuführungshaube
- 24: Erreger
- 25: Querwand (Grundrahmen)
- 26: Ausschnitt
- 27,28,29: Rohr
- 31,32,33: Rohrknie
- 34: Lagerbock
- 35: Generatorwelle
- 54: Poller
- 55, 56, 57: Zwischenwand

## Patentansprüche

1. Gasgekühlter Generator (10, 30) mit einem um eine Achse drehbaren Rotor, einem den Rotor konzentrisch umgebenden Stator (12) und einem mit dem Rotor verbundenen rotierenden Erreger (24), welche entlang der Achse auf einem gemeinsamen Grundrahmen (11) angeordnet sind, wobei erste Mittel zur Kühlung des Rotors und Stators (12) und zweite Mittel zur Kühlung des Erregers (24) vorgesehen sind, welche zum Austausch von Kühlgas über den Grundrahmen (11) miteinander in Verbindung stehen, wobei die Verbindung im wesentlichen über im Grundrahmen verlaufende Rohre (27, 28, 29) und Rohrknie (31, 32, 33) erfolgt, **dadurch gekennzeichnet, dass** das Kühlgas auf der dem Rotor abgewandten Seite in axialer Richtung dem Erreger (24) zugeführt wird, und dass das Kühlgas im Grundrahmen (11) mittels zweier Rohre (27, 28) auf beiden Seiten in axialer Richtung am Erreger (24) vorbeigeführt wird, und
dass die beiden Rohre (27, 28) auf der dem Rotor abgewandten Seite des Erregers (24) innerhalb des Grundrahmens (11) in einem gemeinsamen dritten Rohr (29) enden, welches aus dem Grundrahmen (11) nach oben hinaus zum Erreger (24) führt.

2. Generator nach Anspruch 1, **dadurch gekennzeichnet, dass** der Krümmungsradius der Rohrknie (31, 32, 33) bei vorgegebener Geometrie des Grundrahmens (11) maximal ist.

3. Generator nach einem der Ansprüche 1 bis 2, **dadurch gekennzeichnet, dass** der hydraulische Durchmesser der Rohre (27, 28, 29) bei vorgegebener Geometrie des Grundrahmens (11) maximal ist.

4. Generator nach einem der Ansprüche 1 bis 3, **dadurch gekennzeichnet, dass** die Rohre (27, 28, 29) einen runden Querschnitt aufweisen.

5. Generator nach einem der Ansprüche 1 bis 4, **dadurch gekennzeichnet, dass** die Rohre (27, 28, 29) mit dem Grundrahmen (11) verschraubt oder verschweisst sind.

## Claims

1. Gas-cooled generator (10,30) with a rotor rotatable about an axis, with a stator (12) surrounding the rotor concentrically and with a rotating exciter (24) connected to the rotor, which rotor, stator and exciter are arranged along the axis on a common base frame (11), first means for cooling the rotor and stator (12) and second means for cooling the exciter (24) being provided, which are connected to one another for the exchange of cooling gas via the base frame (11), wherein the connection takes place essentially via tubes (27, 28, 29) and tube elbows (31,32,33) running in the base frame, **characterized in that** the cooling gas is supplied to the exciter (24) in the axial direction on the side facing away from the rotor, and **in that** the cooling gas is led past the exciter (24) in the axial direction on both sides in the base frame (11) by means of two tubes (27, 28), and **in that** the two tubes (27, 28) terminate within the base frame (11), on that side of the exciter (24) which faces away from the rotor, in a common third tube (29) which leads out of the base frame (11) upward to the exciter (24).

2. Generator according to Claim 1, **characterized in that** the radius of curvature of the tube elbows (31,32,33) is at its maximum in the case of a predetermined geometry of the base frame (11).

3. Generator according to either of Claims 1 and 2, **characterized in that** the hydraulic diameter of the tubes (27,28,29) is at its maximum in the case of a predetermined geometry of the base frame (11).

4. Generator as claimed in one of Claims 1 to 3, **characterized in that** the tubes (27,28,29) have a round cross section.

5. Generator as claimed in one of Claims 1 to 4, **characterized in that** the tubes (27,28,29) are screwed or welded to the base frame (11).

## Revendications

1. Générateur refroidi au gaz (10, 30) avec un rotor pouvant tourner autour d'un axe, un stator (12) entourant concentriquement le rotor et un excitateur rotatif (24) assemblé au rotor, qui sont disposés le long de l'axe sur un châssis de base commun (11), dans lequel il est prévu des premiers moyens pour le refroidissement du rotor et du stator (12) et des deuxièmes moyens pour le refroidissement de l'excitateur (24), qui sont en communication les uns avec les autres via le châssis de base (11) pour l'échange de gaz de refroidissement, dans lequel la communication est réalisée essentiellement par des tubes (27, 28, 29) et des courbes tubulaires (31, 32, 33) s'étendant dans le châssis de base, **caractérisé en ce que** le gaz de refroidissement est envoyé à l'excitateur (24) sur le côté opposé au rotor en direction axiale, et **en ce que** le gaz de refroidissement est conduit dans le châssis de base (11) le long de l'excitateur (24) sur les deux côtés en direction axiale au moyen de deux tubes (27, 28), et **en ce que** les deux tubes (27, 28) se terminent à l'intérieur du châssis de base (11), sur le côté de l'excitateur (24) opposé au rotor, en un troisième tube commun (29), qui conduit hors du châssis de base (11) vers le haut jusqu'à l'excitateur (24).

2. Générateur selon la revendication 1, **caractérisé en ce que** le rayon de courbure de la courbe tubulaire (31, 32, 33) est maximal pour une géométrie prédéterminée du châssis de base (11).

3. Générateur selon l'une des revendications 1 à 2, **caractérisé en ce que** le diamètre hydraulique des tubes (27, 28, 29) est maximal pour une géométrie prédéterminée du châssis de base (11).

4. Générateur selon l'une quelconque des revendications 1 à 3, **caractérisé en ce que** les tubes (27, 28, 29) présentent une section transversale ronde.

5. Générateur selon l'une quelconque des revendications 1 à 4, **caractérisé en ce que** les tubes (27, 28, 29) sont vissés ou soudés au châssis de base (11).
